# FASCICULE DE BREVET EUROPEEN

(11) **EP 1 699 667 B1**
(45) Date de publication et mention de la délivrance du brevet: **20.08.2008**
(21) Numéro de dépôt: 04816573.2
(22) Date de dépôt: 17.12.2004
(51) Int. Cl.: B60R 21/34

(54) **BARRE DE CHOC POUR PIETON**
AUFPRALLSTANGE FÜR FUSSGÄNGER
IMPACT BAR FOR PEDESTRIANS

(30) Priorité: 23.12.2003 FR 0351187
(43) Date de publication de la demande: 13.09.2006
(73) Titulaire: RENAULT S.A.S., 92100 Boulogne Billancourt (FR)
(72) Inventeur: BOUCHARD, Laurent, F-91190 Gif/Yvette (FR); BOUVEAU, Mathieu, F-78140 Velizy Villacoublay (FR); PARISET, Jean-Yves, F-78180 Montigny le Bretonneux (FR)
(86) Numéro de dépôt international: PCT/FR2004/050720
(87) Numéro de publication internationale: WO 2005/063532

(56) Documents cités:
- EP-A- 0 983 909
- PATENT ABSTRACTS OF JAPAN vol. 2002, no. 11, 6 novembre 2002 (2002-11-06) -& JP 2002 205613 A (GP DAIKYO CORP), 23 juillet 2002 (2002-07-23)

## Description

Le sujet de cette invention est une barre de choc pour piéton.

De telles barres de choc sont placées usuellement sous un pare-choc principal à l'avant du véhicule et consistent en un profilé tubulaire qui favorise le renvoi d'un piéton ayant été heurté sur le capot plutôt que sous les roues afin de réduire les conséquences de l'accident. Elles peuvent être reliées au berceau du bloc moteur par des points latéraux de fixation, qui ont cependant l'inconvénient de laisser une grande longueur centrale du tube entre eux, de sorte que la barre est trop souple quand elle est heurtée au centre. On remédie à cet inconvénient en ajoutant des biellettes centrales raccordant le tube au berceau et dont la direction est longitudinale ou un peu oblique. Une disposition consiste en une paire de biellettes en vé se joignant au tube à son centre et en divergeant pour joindre le berceau à des points distants. Ces biellettes de renfort résolvent le problème décrit ci-dessus en raidissant le tube au centre contre la flexion, mais elles compliquent le dispositif et le rendent plus pesant, et elles peuvent devenir nuisibles à un accident plus important, puisque leur raideur s'oppose un écrasement complet et laisse subsister une longueur résiduelle des biellettes, qui transmet une déformation d'autant augmentée au reste du véhicule.

On peut aussi mentionner le brevet européen 1 300 293 A9 qui décrit une barre de choc où le tube est remplacé par un plateau garni de nervures longitudinales ; cette conception est rigide, mais encore plus dommageable à la légèreté et à la simplicité. JP 2002 205 613 A décrit une barre de choc correspondant au préambule de la revendication 1.

Le sujet de l'invention est une barre de choc pour piéton comprenant d'abord un profilé principal arrondi à une portion antérieure, généralement tubulaire, et qui est dépourvu d'une souplesse excessive à une portion centrale éloignée des points de fixation. Ceci est réalisé grâce à une lame de choc ayant les caractéristiques de la revendication 1.

De façon ramassée, l'invention est en général relative à une barre de choc pour piéton comprenant un profilé principal disposé à l'avant d'un véhicule, orientée transversalement au véhicule et présentant une portion avant arrondie et des points latéraux de fixation au véhicule, caractérisée en ce qu'elle comprend, à une portion centrale transversalement, entre les points de fixation, un profilé de renfort ayant une section droite dont une dimension principale est orientée en direction longitudinale du véhicule, et qui se raccorde à une portion arrière du profilé principal.

Le profilé de renfort remplace avantageusement des biellettes de maintien. Sa dimension principale peut être avantageusement ajustée pour s'amenuiser vers les points de fixation et ajouter à la raideur surtout là où elle était moindre. Les biellettes n'offrent pas une telle liberté de conception.

Ces aspects de l'invention et d'autres seront décrits au moyen des figures suivantes :
- la figure 1 est une vue générale de l'agencement de l'invention,
- la figure 2 illustre une variante,
- la figure 3 est une vue particulière de l'invention,
- et les autres figures 3A, 3B et 3C sont des coupes de la figure 3 aux lignes AA, BB et CC respectivement.

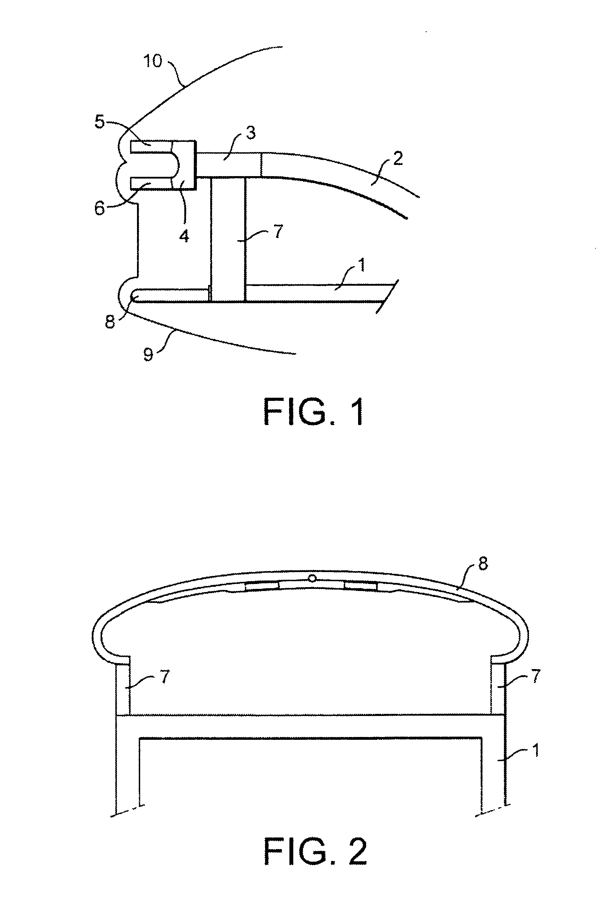

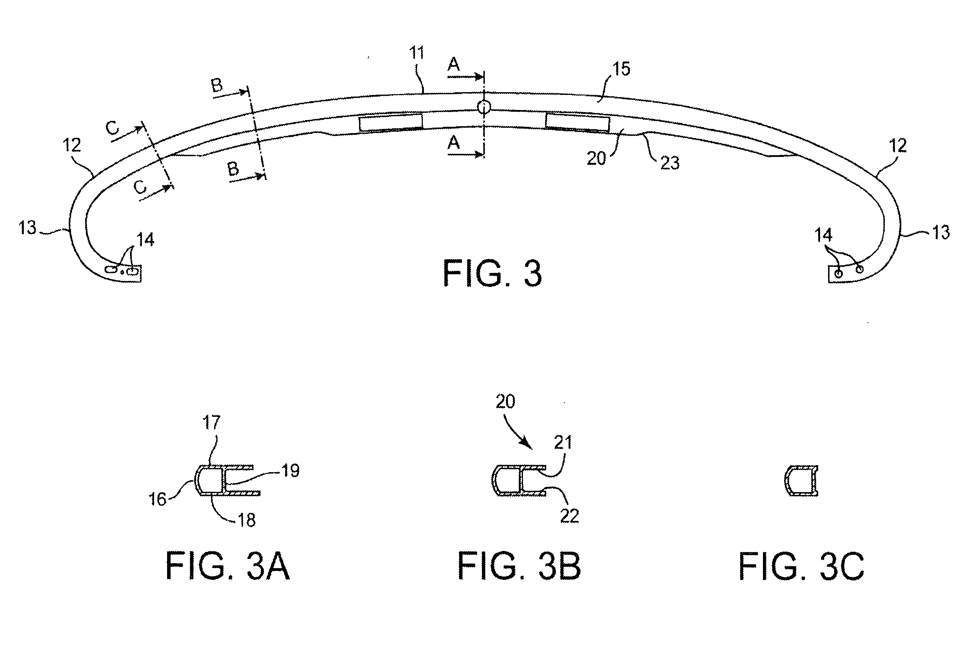

Il est représenté schématiquement l'avant d'un véhicule à la figure 1, don t un berceau 1 d'un bloc moteur et un longeron 2 de chaque côté du berceau 1 . Une extrémité antérieure 3 de chaque longeron 2 est prolongée par un caisson d'écrasement 4 d'un pare-choc puis des traverses 5 et 6 superposées de ce pare-choc et porte une pendeloque 7 qui la relie au berceau 1. Une barre de choc 8, qui est le sujet de l'invention, est fixée au berceau 1. L'ensemble est couvert par la carrosserie 9 et le capot 10 usuels. Dans une variante de construction qui n'affecte pas l'invention, à barre de choc 8 n'est pas fixée au berceau 1 mais aux pendeloques 7 qui, comme les longerons 2, s'étendent des deux côtés du véhicule ; cette variante est représentée à la figure 2. En se reportant plus spécialement à la figure 3, on voit que la barre de choc 8 vue de dessus présente une portion centrale 11 et une paire de portions de bord 13 incurvées sur prés d'un demi-cercle et munies de boutonnières 14 pour des vis de fixation. Aucun autre moyen de fixation ou de liaison de la barre à choc 8 au reste du véhicule n'est plus nécessaire. La portion centrale 11 légèrement incurvée est reliée aux portions de bord 13 par des portions de raccord 12 sensiblement rectilignes.

La barre de choc 8 comprend un profilé principal 15 à section tubulaire, arrondi à une portion antérieure 16, et ici aplati à deux portions 17 et 18 supérieure est inférieure. Le tube est fermé par une portion postérieure 19. Et de façon originale, la barre de choc 8 comporte un profilé de renfort 20 qui est ici composé de deux profilés plats 21 et 22 qui prolongent les portions aplaties 17 et 18 vers l'arrière. Leur dimension à largeur, qui est la dimension principale de leur section droite, est mesurée dans la direction longitudinale du véhicule, et elle est beaucoup plus grande que l'épaisseur, mesurée dans la direction verticale. La raideur à la flexion de à barre de choc 8 est fortement accrue par le profilé de renfort 20, d'autant plus que les profilés plats 21 et 22 sont formés d'un seul tentant avec le profilé principal 15. L'accroissement est plus important là où il et nécessaire : le profilé plat 21 supérieur et le profilé plat 22 inférieur ont une largeur maximale derrière le milieu de à portion centrale 11 (figure 3A), ont une largeur sensiblement nulle au niveau des parties de raccord 12, et leur largeur varie en diminuant, depuis la portion centrale 11 vers la portion de raccord 12.

Il sera compris que la diminution de largeur peut être une diminution progressive continue, ou que, tel que représenté à la figure 3, la diminution de largeur peut être réalisée par des paliers 23. Ces différents mode de réalisation présentent l'avantage d'offrir une barre de choc 8 qui a une raideur sensiblement homogène quelle que soit la localisation transversale de l'impact sur la barre de choc 8.

## Revendications

1. Barre de choc pour piéton comprenant une portion centrale (11), qui s'étend sensiblement transversalement, et des portions latérales (13) de fixation au véhicule, la portion centrale (11) étant formée d'un profilé principal (15) qui présente une portion avant (16) arrondie, et d'un profilé de renfort (20 ; 21 ; 22) ayant une section droite dont une dimension principale est orientée selon la direction longitudinale du véhicule, et qui se raccorde à une portion arrière (19) du profilé principal (15), **caractérisé en ce que** la dimension principale du profilé de renfort s'amenuise vers les portions latérales de fixation.

2. Barre de choc pour piéton selon la revendication 1, **caractérisé en ce que** le profilé de renfort comprend deux profilés plats superposés (21, 22) se raccordant respectivement à deux portions horizontales aplaties (17, 18) du profilé principal, qui est tubulaire, dont chacun a une dimension principale orientée en direction longitudinale du véhicule.

3. Barre de choc pour piéton selon l'une quelconque des revendications précédentes, **caractérisé en ce que** le profilé de renfort s'étend jusqu'à des portions (12) sensiblement rectiligne du profilé principal, qui raccordent une portion centrale (11) incurvée aux portions latérales (13) de fixation.

4. Barre de choc pour piéton selon l'une des revendications précédentes, **caractérisé en ce que** la dimension principale du profilé de renfort diminue de façon continue depuis la portion centrale (11) vers les portions latérales (13) de fixation.

5. Barre de choc pour piéton selon l'une quelconque des revendications précédentes, **caractérisé en ce que** la dimension principale du profilé de renfort diminue depuis la portion centrale (11) vers les portions latérales (13) de fixation, par l'intermédiaire de paliers (23).

## Claims

1. Pedestrian impact bar comprising a central portion (11) which extends substantially transversely, and lateral portions (13) for attachment to the vehicle, the central portion (11) being formed of a main profiled section (15) which has a rounded front portion (16), and of a reinforcing profiled section (20; 21; 22) a main dimension of a cross section of which is directed in the longitudinal direction of the vehicle and which is connected to a rear portion (19) of the main profiled section (15), **characterized in that** the main dimension of the reinforcing profiled section tapers towards the lateral attachment portions.

2. Pedestrian impact bar according to Claim 1, **characterized in that** the reinforcing profiled section comprises two superposed flat profiled sections (21, 22) connecting respectively to two flattened horizontal portions (17, 18) of the main profiled section, which is tubular, each of which has a main dimension directed in the longitudinal direction of the vehicle.

3. Pedestrian impact bar according to either one of the preceding claims, **characterized in that** the reinforcing profiled section extends as far as substantially straight portions (12) of the main profiled section, which connect a curved central portion (11) to the lateral attachment portions (13).

4. Pedestrian impact bar according to any one of the preceding claims, **characterized in that** the main dimension of the reinforcing profiled section decreases continuously from the central portion (11) towards the lateral attachment portions (13).

5. Pedestrian impact bar according to any one of the preceding claims, **characterized in that** the main dimension of the reinforcing profiled section decreases from the central portion (11) towards the lateral attachment portions (13) in steps (23).

## Patentansprüche

1. Aufprallstange für Fußgänger, die einen Mittelabschnitt (11), der sich im Wesentlichen transversal erstreckt, und seitliche Abschnitte (13) für die Befestigung am Fahrzeug enthält, wobei der Mittelabschnitt (11) aus einem Hauptprofil (15), das einen abgerundeten vorderen Abschnitt (16) aufweist, und aus einem Verstärkungsprofil (20; 21; 22), das einen geradlinigen Abschnitt besitzt, dessen Hauptabmessung in Längsrichtung des Fahrzeugs orientiert ist und der mit einem hinteren Abschnitt (19) des Hauptprofils (15) verbunden ist, gebildet ist, **dadurch gekennzeichnet, dass** die Hauptabmessung des Verstärkungsprofils zu den seitlichen Befestigungsabschnitten hin abnimmt.

2. Aufprallstange für Fußgänger nach Anspruch 1, **dadurch gekennzeichnet, dass** das Verstärkungsprofil zwei übereinander liegende ebene Profile (21, 22) enthält, die mit zwei entsprechenden abgeflachten horizontalen Abschnitten (17, 18) des Hauptprofils, das rohrförmig ist, verbunden sind und wovon jedes eine Hauptabmessung hat, die in Längsrichtung des Fahrzeugs orientiert ist.

3. Aufprallstange für Fußgänger nach einem der vorhergehenden Ansprüche, **dadurch gekennzeichnet, dass** sich das Verstärkungsprofil bis zu im Wesentlichen geradlinigen Abschnitten (12) des Hauptprofils erstreckt, die einen gekrümmten Mittelabschnitt (11) mit den seitlichen Befestigungsabschnitten (13) verbinden.

4. Aufprallstange für Fußgänger nach einem der vorhergehenden Ansprüche, **dadurch gekennzeichnet, dass** die Hauptabmessung des Verstärkungsprofils von dem Mittelabschnitt (11) zu den seitlichen Befestigungsabschnitten (13) kontinuierlich abnimmt.

5. Aufprallstange für Fußgänger nach einem der vorhergehenden Ansprüche, **dadurch gekennzeichnet, dass** die Hauptabmessung des Verstärkungsprofils von dem Mittelabschnitt (11) zu den seitlichen Befestigungsabschnitten (13) über Stufen (23) abnimmt.
